# EUROPEAN PATENT SPECIFICATION

(11) **EP 2 172 165 B1**
(45) Date of publication and mention of the grant of the patent: **26.06.2013**
(21) Application number: 09015570.6
(22) Date of filing: 20.02.2003
(51) Int. Cl.: A61C 1/18, F16C 1/24, F16N 11/00, F01M 11/04, F16C 33/38, F16C 33/66

(54) **dental handpiece with improved grease retention**
zahnärztliches Handstück mit verbesserter Schmierfetthalterung
pièce à main dentaire avec une meilleure rétention de la graisse

(30) Priority: 27.02.2002 US 359962 P; 20.02.2003 US 371033
(43) Date of publication of application: 07.04.2010
(62) Divisional of application: 03711152.3
(73) Proprietor: DENTSPLY International Inc., York, PA 17405-0872 (US)
(72) Inventor: Ayzenstetyn, Mikhail, Buffalo Grove, IL 60089 (US); Novak, Eugene J., Deerfield, IL 60015 (US)
(74) Representative: Hartz, Nikolai

(56) References cited:
- US-A- 5 571 013
- US-A- 5 911 579
- US-A- 5 941 704
- US-A- 6 164 831

## Description

### TECHNICAL FIELD

The present invention is directed toward dental handpieces of the type employing greased bearings. More particularly, the invention is directed toward a dental handpiece having improved grease retention even with repeated exposure to conventional sterilization practices. The handpiece has at least one bearing retainer with a unique geometry of grease retention grooves.

### BACKGROUND OF THE INVENTION

Dental handpieces of many types, including the air-driven type are known to have an outer housing which often includes a neck portion. Within the chamber of the housing is a rotor adapted to be driven by air supplied through the handle and neck. The housing often includes upper and lower openings that are axially aligned with a rotor being supported for rotation by upper and lower bearing assemblies. The rotor often includes a bur tube that extends substantially between the openings and has a central bore axially aligned with those openings. The lower end of the bore conventionally receives a gripping chuck that is often fixed to the bur tube. Such a dental handpiece is disclosed for example, in U.S. Pat. No. 4,089,115 and US6164831.

The bearing assemblies often include a plurality of balls held within a retainer. For example, U.S. Pat. No. 3,994,544 discloses such a ball and retainer bearing assembly. It was a stated object of the invention of that patent to provide for a bearing for a high-speed turbine, such as may be used in a dental handpiece, and wherein the balls and retainer assembly was greased. Greasing of the bearing assemblies has proven to be a useful and desirable method of reducing friction between the balls and their supporting structure, leading to reduced wear, noise, heat build-up during use and overall improved operability of the handpieces. However, dental handpieces are unique in their use of greased bearings because of their intended use. More particularly, dental handpieces are often run at high speeds of up to 450,000 rpm or greater. Further, after each use, the handpiece must be carefully sterilized before it is used with another patient. Sterilization processes often include the use of high temperature, humidity and pressure. Such processes rapidly degrade the grease packing associated with the handpiece bearings. The grease must often be repacked, which is a time consuming and often difficult job.

A need exists therefore for a grease packed dental handpiece with improved grease retention characteristics. The handpiece should be improved with respect to the length of time and number of sterilization and use procedures that it can be subjected to before repacking is necessary. The dental professional and the patient would both benefit from such a handpiece in the form of improved product quality, improved dental procedure efficiency and overall reduced dental procedure costs.

### SUMMARY OF THE INVENTION

The invention is as claimed in claim 1.

It is therefore, an object of the invention to provide a dental handpiece.

It is another object of the invention to provide an improved grease-packed dental handpiece.

It is another object of the invention to provide a dental handpiece improved with respect to its grease retention characteristics.

These and other objects of the invention that will become apparent from the following discussion, are accomplished by the invention as hereinafter described and claimed.

These and other objects of the invention, which will become apparent from the present disclosure, are carried out by the invention as hereinafter described.

In general, a dental handpiece of the type having a rotary member supported by at least one bearing assembly, wherein said at least one bearing assembly has an annular retainer and a plurality of balls at least partially supported by said annular retainer, the improvement comprising a grease retention groove in a surface of said annular retainer.

### BRIEF DESCRIPTION OF THE DRAWING

Figures 2-4 show embodiments not according to the present invention.

FIGURE 1 is a side elevational view of the working head portion of a dental handpiece, having a retainer element according to the present invention.

FIGURE 2 is a perspective view of a retainer element.

FIGURE 3 is a perspective view of an alternative embodiment of a retainer element.

FIGURE 4 is a perspective view of an alternative embodiment of a retainer element.

FIGURE 5 is a perspective view of a retainer element according to the present invention.

### PREFERRED EMBODIMENTS FOR CARRYING OUT THE INVENTION

The present invention has application to any dental handpiece where it is advantageous to provide for improved grease retention properties. Such properties are especially advantageous in dental handpieces that are subj ected to repeated use and sterilization under harsh conditions of high heat and moisture. The present invention may therefore, find application in any handpiece driven by electric motor, pressurized air or the like.

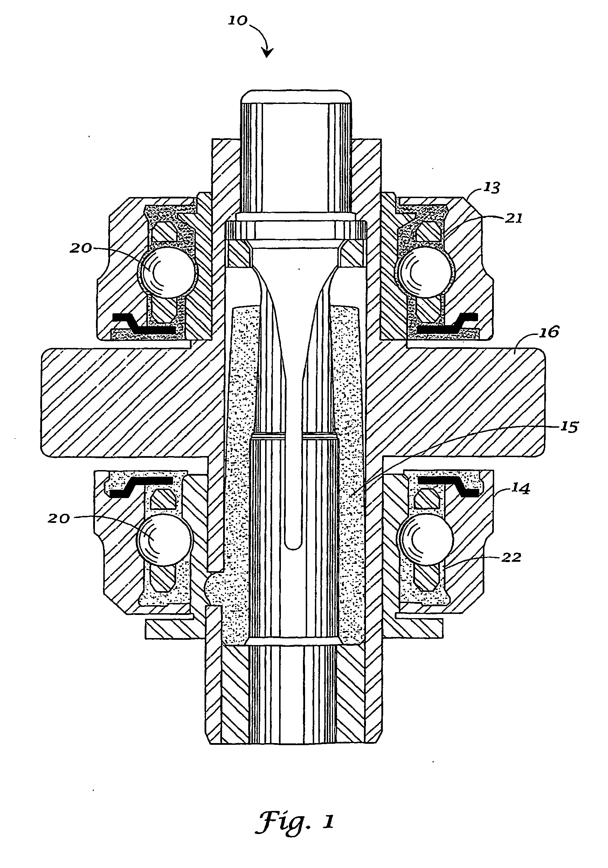

The handpiece selected for illustration is an air-driven handpiece 10 having a pair of ball bearing assemblies 13 and 14 supporting rotor 15 for rotation. The rotor includes any conventional driving means such as for example, an air-turbine16 for rotatably driving rotor 15. The turbine depicted in FIGURE 1 is a radial-flow turbine that is driven by air, but of course, can be of any conventional design.

Bearing assemblies 13 and 14 are each provided with a plurality of balls 20 supported by annular retainers 21 and 22. The invention will be exemplified with reference to bearing retainer 21, it being understood that at least one and preferably both retainers 21 and 22 have the structure according to the present invention.

Handpiece 10 is of the type wherein grease (not shown) is packed into the head, such that the balls are physically coated or contacted by the grease during use. As turbine 16 causes rotor 15 to rotate, rotor 15 is supported by bearing assemblies 13 and 14. Hence, balls 20 and retainer 21 support rotation of rotor 15. In other words, rotor 15 is journaled within bearing assemblies 13 and 14. As is conventional, balls 20 are rollingly supported by retainer 21 within ball apertures 23. The presence of grease helps to reduce the friction encountered between the contacting parts, including the balls 20, retainer 21 and the rotor 15. According to the present invention, retainer 21 has structure to facilitate the physical retention of grease in proximity to such contacting parts, assuring its continued, affective presence even after repeated use and sterilizations, at least compared to conventional handpieces.

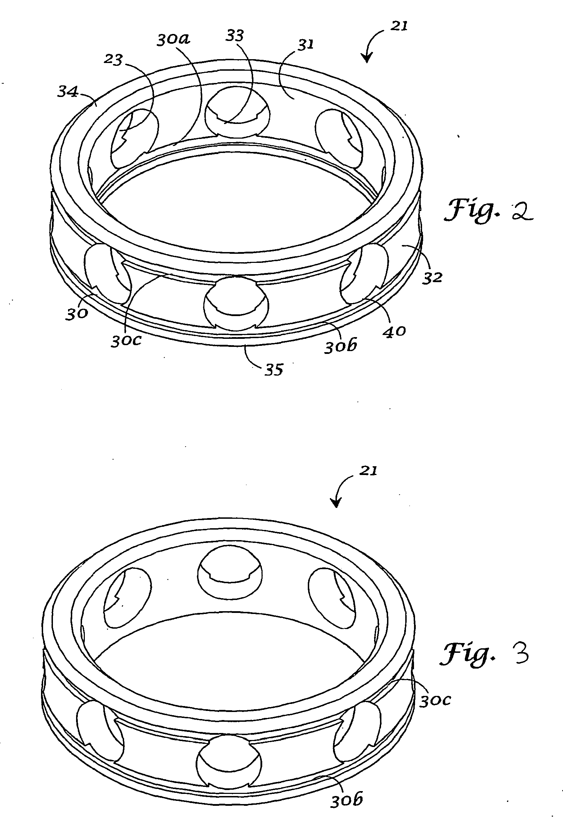

In order to facilitate such grease retention, retainer 21 is provided with at least one groove 30 in a surface thereof. By "surface" it is meant some external surface. For example, retainer 21 shown in FIGURE 2 has an inner surface 31, and outer surface 32, ball retention aperture surfaces 33, upper surfaces 34 and lower surfaces 35. Further, retainer 21 shown in FIGURE 1 has an inner annular groove 30a disposed on inner surface 31, a first outer annular groove 30b disposed upon outer surface 32, and a second outer annular groove 30c also disposed upon outer surface 32.

In the embodiment depicted in FIGURE 2, first outer annular groove 30b and second outer annular groove 30c are spaced apart such that ball apertures 23 are positioned therebewteen. Further, there is preferably an overlapping or cut-away portion of each groove 30 and a portion of each ball aperture 23, such as at overlapping portion 40. Overlapping portion 40 allows for ingress of grease held within a groove 30 into ball aperture 23 to thereby lubricate a ball 20 held therein.

It will be appreciated that any number, size, depth, location or shape of groove 30 is possible. Further, as will be more fully explored below, the embodiment can be carried out with other than a groove, such as with a hole, aperture, depression, detent, dimple, cut, void, slice or the like, and need not be annular or even regularly spaced.

For example, FIGURE 3 illustrates an embodiment having first and second outer annular grooves 30b and 30c, but no inner groove.

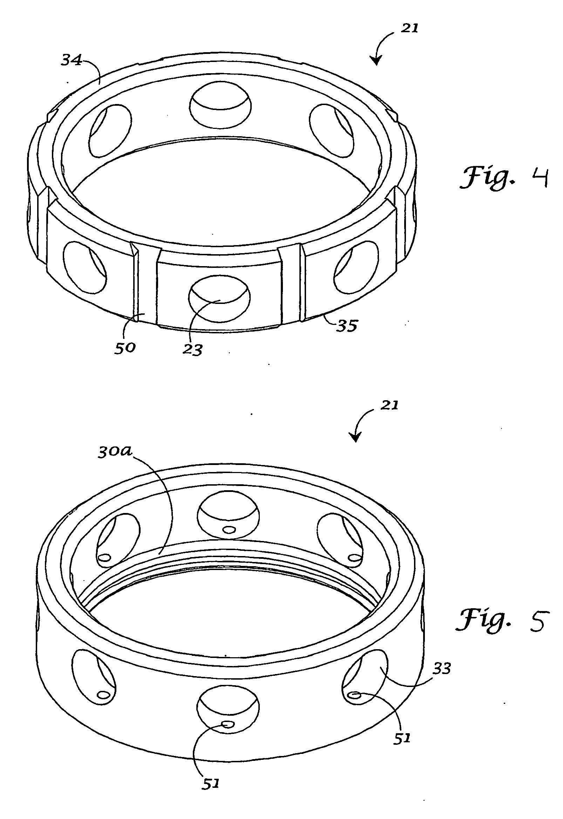

FIGURE 4 illustrates an embodiment wherein a plurality of straight grooves 50 extending between upper and lower surfaces 34 and 35. In this illustration, straight grooves 50 are regularly spaced between each ball aperture 23, but need not be so. Further, grooves 50 need not be straight but may be any shape or configuration.

FIGURE 5 illustrates a retainer 21 having an inner annular groove 30a, and also having a plurality of grease retaining dimples or voids 51, in this case, positioned within ball aperture surfaces 33. It will be appreciated that voids 51 can be positioned upon any external surface of retainer 21 , and that any number of such voids 51 may be employed.

The size, shape, depth, spacing and location of all grooves 30, 50 or voids 51 may be varied and all fall within the scope of the invention. Each such aspect will be varied based upon the optimal end use conditions of the device with which the given retainer 21 is employed.

It has been found that the presence of grooves 30, 50 or voids such as voids 51, improve the useful life of a grease packed handpiece with which they are employed. It is believed that the grooves 30, 50 or voids 51 provide a place for excess amounts of greased to congregate or collect, beyond the amount of grease otherwise capable of being positioned proximate to the respective components. This improved collection helps to ensure a supply of grease beyond that conventional dental handpieces. A handpiece according to the present invention thus has a longer life of use and sterilization, as compared to an otherwise similar handpiece without the inventive structure. This serves to improve the overall bearing life and hence the overall life of the handpiece, as well as ensuring that noise and friction reduction are maintained for longer periods of time than is otherwise possible.

It should be apparent therefore, that the present invention provides an advantage and an improvement over known dental handpieces.

## Claims

1. A dental handpiece (10) of the type having a rotary member supported by at least one bearing assembly (13, 14), wherein said at least one bearing assembly (13, 14) has an annular retainer (21) and a plurality of balls (20) at least partially supported by said annular retainer (21), the annular retainer (21) rollingly supporting the balls (20) within ball apertures (23) **characterized in that** the annular retainer (21) has an inner annular groove (30a) and a plurality of grease retaining dimples or voids (51) positioned within ball aperture surfaces (33) of said annular retainer (21) for providing a place for excess amounts of grease and facilitating the physical retention of grease in proximity to contacting parts.

## Patentansprüche

1. Zahnärztliches Handstück (10) vom Typ, der ein rotierendes Bauteil aufweist, das von mindestens einer Lageranordnung (13, 14) gehalten wird, wobei die mindestens eine Lageranordnung (13, 14) einen ringförmigen Halter (21) und eine Mehrzahl an Kugeln (20) aufweist, die mindestens teilweise von dem ringförmigen Halter (21) gehalten werden, wobei der ringförmige Halter (21) die Kugeln (20) in Kugelöffnungen (23) rollend hält, **dadurch gekennzeichnet, dass** der ringförmige Halter (21) eine ringförmige Innenrille (30a) aufweist sowie eine Vielzahl von Schmierfett-bewahrenden Grübchen oder Poren (51), die auf der Kugelöffnungsoberfläche (33) des ringförmigen Halters (21) vorgesehen sind, zur Bereitstellung eines Ortes für überschüssige Mengen an Schmierfett und zur physischen Bewahrung des Schmierfetts in der Nähe der sich kontaktierenden Teile.

## Revendications

1. Pièce à main dentaire (10) du type ayant un élément rotatif supporté par au moins un ensemble de palier (13, 14), où ledit au moins un ensemble de palier (13, 14) a un élément de retenue annulaire (21) et une pluralité de billes (20) au moins partiellement supportées par ledit élément de retenue annulaire (21), l'élément de retenue annulaire (21) supportant par roulement les billes (20) à l'intérieur des ouvertures de billes (23) **caractérisée en ce que** l'élément de retenue annulaire (21) a une rainure annulaire interne (30a) et une pluralité de creux ou de vides de retenue de graisse (51) positionnés à l'intérieur des surfaces d'ouverture de billes (33) dudit élément de retenue annulaire (21) pour fournir un emplacement pour des quantités excessives de graisse et faciliter la rétention physique de graisse à proximité des parties de contact.
